# EUROPÄISCHE PATENTSCHRIFT

(11) **EP 0 559 680 B1**
(45) Veröffentlichungstag und Bekanntmachung des Hinweises auf die Patenterteilung: **05.07.1995**
(21) Anmeldenummer: 91920147.5
(22) Anmeldetag: 22.11.1991
(51) Int. Cl.: C01B 33/32

(54) **VERFAHREN ZUR HYDROTHERMALEN HERSTELLUNG VON KRISTALLINEM NATRIUMDISILIKAT**
PROCESS FOR THE HYDROTHERMAL PRODUCTION OF CRYSTALLINE SODIUM DISILICATE
PROCEDE DE PRODUCTION HYDROTHERMALE DE DISILICATE DE SODIUM CRISTALLIN

(30) Priorität: 01.12.1990 DE 4038388
(43) Veröffentlichungstag der Anmeldung: 15.09.1993
(73) Patentinhaber: Henkel Kommanditgesellschaft auf Aktien, 40191 Düsseldorf (DE)
(72) Erfinder: JUST, Günther, D-4010 Hilden (DE)
(86) Internationale Anmeldenummer: EP9102202
(87) Internationale Veröffentlichungsnummer: WO9209526

(56) Entgegenhaltungen:
- EP-A- 0 164 552
- US-A- 2 881 049
- Bulletin de la Société Chimique de France, veröffentlicht 1950, Paris (FR), J. Franke: "Le transport de la silice et la formation de di-silicate de sodium par voie hydrothermale", Seiten 454-458, siehe den ganzen Artikel (In der Anmeldung erwähnt)

## Beschreibung

Die Erfindung betrifft ein Verfahren zur hydrothermalen Herstellung von kristallinem Natriumdisilikat aus Quarzsand und Natronlauge und/oder aus wäßrigen Lösungen von Natriumdisilikat.

Die Herstellung kristalliner Natriumsalze von Kieselsäuren mit einem SiO₂/Na₂O-Verhältnis von 2 : 1 bis 3 : 1 erfolgt üblicherweise durch Temperung von Natriumsilikat-Gläsern oder durch Erhitzen von Natriumcarbonat und Quarz (DE-A-31 00 942).

Willgallis und Range (Glastechnische Berichte, 37 (1964), 194-200) beschreiben die Herstellung von α,β- und γ-Na₂Si₂O₅ durch Temperung von geschmolzenem und nicht geschmolzenem, entwässertem Natronwasserglas. Diese Produkte haben Schichtstruktur. Daß es sich um kristalline Formen handelt, ergibt sich aus den Röntgendiffraktionsspektren. Die Autoren zeigen, daß in Abhängigkeit von der Temperatur verschiedene Kristallformen erhalten werden.

Benecke und Lagaly beschreiben in Am. Mineral., 62 (1977), 763-771 ein Verfahren zur Herstellung eines hydratisierten, kristallinen Natriumsilikates mit Kanemit-Struktur (etwa der Zusammensetzung NaHSi₂O₅). Dabei wird in einem ersten Schritt SiO₂ in Methanol dispergiert und mit kalter Natronlauge versetzt. Dieses Verfahren ist aufwendig wegen der kontrollierten Zugabe der einzelnen Substanzen und erfordert wegen der Verwendung an brennbarem Methanol spezielle Sicherheitsvorkehrungen.

In der DE-A-34 17 649 wird ein Verfahren beschrieben, bei dem man hydratisiertes Natriumsilikat mit Kristallkeimen versetzt, die Reaktionsmischung durch Erhitzen entwässert und die entwässerte Reaktionsmischung so lange bei einer Temperatur hält, die mindestens 450 °C beträgt, jedoch unter dem Schmelzpunkt liegt, bis sich das kristalline Natriumsilikat mit Schichtstruktur gebildet hat.

Bei der Entwässerung (beim Eindampfen) von Wasserglaslösungen oder Lösungen üblicher Natriumsilikate (ohne Schichtstruktur) mit einem Mol-Verhältnis SiO₂/Na₂O von 1,9 : 1 bis 3,5 : 1 werden amorphe Produkte erhalten. Erst bei Temperaturen oberhalb 450 °C und im Verlauf mehrerer Stunden kristallisieren diese Produkte in Gegenwart einer wäßrigen Phase (DE-A-34 17 649). Für diese Reaktion sind im allgemeinen mehrere Stunden notwendig. Bei Temperaturen zwischen 600 und 850 °C reichen mitunter auch Minuten und bei bestimmten Silikaten Bruchteile einer Minute aus.

EP-A-0 320 770 beschreibt ein Verfahren zur Herstellung von röntgenkristallinem Natriumdisilikat (Natriumsilikat mit Schichtstruktur) durch Auflösen von röntgenkristallinem Schichtsilikat in Wasser und anschließendem Eindampfen bei erhöhter Temperatur. Dieses Verfahren geht dabei bereits von kristallinem Natriumschichtsilikat aus und ist speziell auf die Herstellung von Natriumdisilikat-haltigen Wasch- und Reinigungsmitteln gerichtet. Diese Druckschrift beschreibt lediglich eine Verarbeitungsform von primär durch andere Verfahren erhaltenem kristallinem Natriumdisilikat durch Lösen in Wasser und anschließendes Verdampfen von Wasser.

Gleichermaßen ist dem Fachmann bekannt, daß das Lösen von amorphem Natriumdisilikat in Wasser und anschließendem Eindampfen wiederum zu amorphem Natriumdisilikat führt.

Gemäß dem Stand der Technik ist es bisher nicht möglich, in einer technisch realisierbaren Form auf hydrothermalem Weg direkt zu kristallinem Natriumdisilikat mit einer hohen Reinheit zu gelangen.

J. Franke (Bull. Soc. Chim., 1950, S. 454 f) beschreibt Versuche zur hydrothermalen Herstellung von Natriumdisilikat. Zur Isolation des Reaktionsproduktes aus Quarz und Natriumhydroxidlösung wurde in aufwendigen Apparaturen z.T. durch Einsatz von Kristallisationskeimen versucht, eine Kristallisation des Reaktionsproduktes herbeizuführen. Die erhaltenen Reaktionsprodukte überließ man anschließend mehrere Wochen unter Kühlung der Kristallisation, wobei man oft Gemische aus amorphem und kristallinem Natriumdisilikat erhielt.

Es bestand nun die Aufgabe, ein einfaches Verfahren bereitzustellen, daß es ermöglicht, ausgehend von Quarzsand und Natriumhydroxid-Lösung und/oder wäßrigen Lösungen von Natriumdisilikat in einer Stufe kristallines, hochreines Natriumdisilikat herzustellen.

Überraschend wurde nun gefunden, daß festes, kristallines und hochreines Natriumdisilikat bei der hydrothermalen Umsetzung von Quarzsand und Natronlauge und/oder wäßrigen Lösungen von Natriumdisilikat anfällt und daß bei Einsatz einer geeigneten Reaktionsapparatur hohe Gesamtfeststoffkonzentrationen verarbeitet werden können, wodurch eine Möglichkeit eröffnet wird, direkt zu pulvrigem, kristallinem Natriumdisilikat zu gelangen (Feststoffverfahren).

Gemäß der Erfindung wurde die Aufgabe gelöst durch ein Verfahren zur hydrothermalen Herstellung von festem, kristallinem und hochreinem Natriumdisilicat in der β-Form mit einem Molverhältnis Na₂O : SiO₂ von 1 : 2, wobei man Quarzsand mit Natronlauge und/oder eine wäßrige Lösung von Natriumdisilicat bei erhöhter Temperatur und unter dem dieser Temperatur entsprechenden Druck in einem Druckbehälter umsetzt,
dadurch gekennzeichnet, daß man
(a) in einem ersten Schritt ein Gemisch aus Quarzsand und Natronlauge und/oder eine wäßrige Lösung von Natriumdisilicat mit einer Gesamtfeststoffkonzentration von über 75 Gew.-% auf mindestens 235 °C erhitzt,
(b) in einem zweiten Schritt durch Entfernen von Wasser aus dem Reaktionsgemisch den Gesamtfeststoffgehalt auf bis zu 100 Gew. -% aufkonzentriert und
(c) anschließend das als Feststoff angefallene kristalline Natriumdisilicat abkühlt.

Unter Gesamtfeststoffkonzentration versteht man hierbei den prozentualen Anteil der insgesamt eingesetzten Feststoffe SiO₂ und Na₂O (aus NaOH berechnet), im Falle von wäßrigen Lösungen von Natriumdisilikat den darin enthaltenen Anteil an Feststoff oder bei Gemischen aus Quarzsand, Natriumhydroxid und wäßrigen Lösungen aus Natriumdisilikat die Summe aller darin enthaltenen Feststoffe.

Der erste Schritt des Verfahrens entspricht einer Aufschlußreaktion, welche bei einer Temperatur von mindestens 235 °C in einem Druckbehälter (Autoklav/Rührautoklav) durchgeführt wird. Die bei dieser Temperatur zur Erzielung eines quantitativen Umsatzes notwendige Reaktionszeit beträgt 2 bis 3 h. Ein Umsatz an Quarzsand von ca. 99 % kann schon nach einer Reaktionszeit von 30 min erhalten werden. Gemäß der Erfindung können Umsatz-Werte von über 99,9 % erzielt werden.

Allgemein gilt, daß sich die Reaktionszeit mit zunehmender Reaktionstemperatur verkürzt, jedoch die Reaktionstemperatur, um den verfahrenstechnischen Aufwand in einem durchführbaren Rahmen zu halten, zwischen 235 und 300 °C, insbesondere zwischen 250 und 280 °C liegt. Dennoch kann die Reaktion auch jederzeit bei einer Reaktionstemperatur von oberhalb von 300 °C durchgeführt werden. Dies ist insbesondere dann von Interesse, wenn kurze Reaktionszeiten erzielt werden sollen, wie dies bei einer kontinuierlichen Verfahrensführung der Fall ist.

Für den Einsatz von wäßrigen Lösungen von Natriumdisilikat gilt hinsichtlich der angegebenen Konzentrations- und Temperaturbereiche Entsprechendes. Die Lösung ist gegebenenfalls den Konzentrationserfordernissen durch Aufkonzentration anzupassen.

In einem zweiten Schritte schließt sich eine Aufkonzentration des Gesamtfeststoffgehalts auf bis zu 100 Gew.-% durch Entfernung von Wasser aus dem Reaktionsgemisch an. Die Aufkonzentration kann aber auch, wie bereits beim Suspensionsverfahren beschrieben, bereits während des Erhitzens des Reaktionsgemisches erfolgen. Anschließend wird das angefallene, kristalline Natriumdisilikat als Feststoff entnommen.

Zur Verarbeitung von Gesamtfeststoffkonzentrationen über 75 Gew.-% ist die Durchführung des Verfahrens in einer Kombination zweier bekannter Apparaturen, nämlich der eines Rollautoklaven und einer Kugelmühle, bevorzugt.

Bei der Apparatur handelt es sich zunächst um einen handelsüblichen, heizbaren und für höhere Drucke ausgelegten Rollautoklaven, d.h. einen druckfesten zylindrischen Hohlkörper, der sich um die eigene Achse dreht. Die Besonderheit besteht darin, daß der Rollautoklav mit Mahlkugeln aus Keramik oder Metall teilweise gefüllt ist.

Die eingefüllte Kugelmenge beträgt 5 bis 20 Vol.-%, vorzugsweise 5 bis 10 Vol.-% und richtet sich nach der gestellten Aufgabe. Angestrebt wird eine geringe Menge, um möglichst viel Reaktionsraum zur Verfügung zu haben. Auch die Kugelgröße wird von der zu lösenden Aufgabe bestimmt. Doch wird man größeren und damit schwereren Kugeln wegen der größeren Mahlwirkung den Vorzug einräumen. Die Drehzahl wird auf einen niedrigen Wert eingestellt, um die Druckapparatur zu schonen. Dem selben Zweck dient eine mögliche Innenauskleidung aus auswechselbaren Verschleißblechen.

Mit einer solchen Apparatur lassen sich bevorzugt Reaktionen bei höherer Temperatur und höherem Druck durchführen, die mit störender Agglomerisation oder Wandanbackung einhergehen und insbesondere das "Eindampfen zur Trockene", also hohe Gesamtfeststoffkonzentrationen, in vielen Fällen beherrschbar macht. Es sind aber auch Fälle denkbar, wo wegen der Produkteigenschaften die gewünschte Wirkung ausbleibt. Deshalb muß die Eignung dieser Apparatekombination von Fall zu Fall überprüft werden. Die Reaktionszeit zur Erzielung eines quantitativen Umsatzes beträgt zwischen 1 und 3 h.

Werden Gesamtfeststoffkonzentrationen von über 75 Gew.-%, vorzugsweise über 90 Gew.-% im Verfahren mit dem Rollautoklav mit Kugelfüllung angewandt, können bis zu 100 % Ausbeute an kristallinem Natriumdisilikat erzielt werden.

Mit dem Feststoffverfahren erhält man direkt kristallines, gut fließfähiges Natriumdisilikat, welches durch geeignete Maßnahmen dem Autoklaven entnommen werden muß. Durch Siebung lassen sich die zugegebenen Kugeln zurückgewinnen.

Das so erhaltene kristalline Natriumdisilikat besitzt eine Reinheit von über 95 % und besteht aus der β-Form (Tieftemperatur-Form) wie durch Röntgenbeugungsdiagramme nachgewiesen wurde.

In einen 370 l-Rollautoklav mit Nickel-Plattierung werden 30 l (65 kg) Aluminiumoxid-Kugeln (38 mm Durchmesser) gefüllt. Danach wird der Autoklav mit 85,7 kg Quarzsand der Körnung 0,1 bis 0,5 mm und 114,3 kg Natronlauge (50 Gew.-%) gefüllt, verschlossen und bei einer Drehzahl von 5 UpM mittels Gasheizung auf 250 °C aufgeheizt und bei dieser Temperatur 1 h gehalten.

Anschließend werden ca. 70 l Wasser bei einer Temperatur über 200 °C abdestilliert und der Autoklav nach einer Abkühlphase geöffnet und durch Absaugen entleert. Die Ausbeute beträgt 125 kg, davon 115 kg in der Korngröße 0,1 bis 0,2 mm. Der Rest weist größere Korngrößen auf, kann aber nach einer Mahlstufe zum Feinkorn zugeschlagen werden.

Gemäß Röntgenbeugungsdiagramm handelt es sich ganz überwiegend um kristallines Natriumdisilikat der β-Form. Das Calciumbindevermögen des Produktes, ausgedrückt in mgCaO pro Gramm Aktivsubstanz, liegt bei ca. 190.

## Patentansprüche

1. Verfahren zur hydrothermalen Herstellung von festem, kristallinem und hochreinem Natriumdisilicat in der β-Form mit einem Molverhältnis Na₂O : SiO₂ von 1 : 2, wobei man Quarzsand mit Natronlauge und/oder eine wäßrige Lösung von Natriumdisilicat bei erhöhter Temperatur und unter dem dieser Temperatur entsprechenden Druck in einem Druckbehälter umsetzt,
dadurch gekennzeichnet, daß man
(a) in einem ersten Schritt ein Gemisch aus Quarzsand und Natronlauge und/oder eine wäßrige Lösung von Natriumdisilicat mit einer Gesamtfeststoffkonzentration von über 75 Gew.-% auf mindestens 235 °C erhitzt,
(b) in einem zweiten Schritt durch Entfernen von Wasser aus dem Reaktionsgemisch den Gesamtfeststoffgehalt auf bis zu 100 Gew.-% aufkonzentriert und
(c) anschließend das als Feststoff angefallene kristalline Natriumdisilicat abkühlt.

2. Verfahren nach Anspruch 1, dadurch gekennzeichnet, daß ein Rollautoklav mit Kugelfüllung als Druckbehälter eingesetzt wird.

3. Verfahren nach Anspruch 1 oder 2, dadurch gekennzeichnet, daß die Reaktionstemperatur zwischen 235 und 300 °C, vorzugsweise zwischen 250 und 280 °C, liegt.

4. Verfahren nach Ansprüchen 1 bis 3, dadurch gekennzeichnet, daß die Aufkonzentration durch Entfernen von Wasser bereits während dem Erhitzen des Reaktionsgemisches erfolgt.

## Claims

1. A process for the hydrothermal production of solid, crystalline high-purity sodium disilicate in the β form with a molar ratio of Na₂O to SiO₂ of 1:2, quartz sand being reacted with sodium hydroxide and/or an aqueous solution of sodium disilicate in a pressure vessel at elevated temperature and under the pressure corresponding to that temperature,
characterized in that
(a) in a first step, a mixture of quartz sand and sodium hydroxide and/or an aqueous solution of sodium disilicate with a total solids concentration of more than 75% by weight is heated to at least 235°C,
(b) in a second step, the total solids content is concentrated to as high as 100% by weight by removal of water from the reaction mixture and
(c) the crystalline sodium disilicate accumulating as a solid is cooled.

2. A process as claimed in claim 1, characterized in that a ball-filled roller autoclave is used as the pressure vessel.

3. A process as claimed in claim 1 or 2, characterized in that the reaction temperature is in the range from 235 to 300°C and preferably in the range from 250 to 280°C.

4. A process as claimed in claims 1 to 3, characterized in that concentration is carried out by removal of water during the actual heating of the reaction mixture.

## Revendications

1. Procédé de production hydrothermale de disilicate de sodium solide, cristallin, et très pur sous la forme β, ayant un rapport molaire Na₂O : SiO₂ de 1:2, dans lequel on fait réagir du sable quartzique avec de la lessive de soude et/ou une solution aqueuse de disilicate de sodium à température élevée et sous la pression correspondant à cette température, dans un récipient sous pression, caractérisé en ce que l'on :
a) chauffe dans une première étape un mélange à base de sable quartzique et de lessive de soude et/ou d'une solution aqueuse de disilicate de sodium ayant une concentration totale en solides de plus de 75 % en poids, à au moins 235°C.
b) concentre dans une deuxième étape, par élimination de l'eau du mélange réactionnel, la teneur totale en solide jusqu'à 100 % en poids
c) refroidit ensuite le disilicate de sodium cristallin produit sous forme de substance solide.

2. Procédé selon la revendication 1 caractérisé en ce que l'on met en oeuvre un autoclave tournant avec un remplissage de billes, comme récipient sous vide.

3. Procédé selon la revendication 1 ou 2, caractérisé en ce que la température de réaction se situe entre 235°C et 300°C - de préférence entre 250 et 280°C.

4. Procédé selon les revendications 1 à 3, caractérisé en ce que la concentration s'effectue par élimination de l'eau déjà pendant le chauffage du mélange réactionnel.
